(19) **Europäisches Patentamt European Patent Office Office européen des brevets**

(11) **EP 4 760 336 A1**

(12) # EUROPEAN PATENT APPLICATION

(43) Date of publication:
**17.06.2026 Bulletin 2026/25**

(21) Application number: **24218658.3**

(22) Date of filing: **10.12.2024**

(51) International Patent Classification (IPC):
**G01S 7/481** (2006.01)  **G01S 7/4911** (2020.01)
**G01S 7/497** (2006.01)  **G01S 17/34** (2020.01)

(52) Cooperative Patent Classification (CPC):
**G01S 7/497; G01S 7/4814; G01S 7/4911;
G01S 17/34**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Stichting IMEC Nederland
5656 AE Eindhoven (NL)**

(72) Inventors:
- **ZHANG, Xuebing
 5614 GA Eindhoven (NL)**
- **PÉREZ SANTACRUZ, Javier
 5022 CE Tilburg (NL)**
- **OLDENBEUVING, Ruud
 5651 HE Eindhoven (NL)**

(74) Representative: **AWA Sweden AB
Matrosgatan 1
Box 5117
200 71 Malmö (SE)**

(54) **A LASER SYSTEM, A LIDAR SYSTEM, AND A METHOD FOR IMPROVING LINEARITY OF FREQUENCY CHIRP**

(57)    According to an aspect of the present inventive concept there is provided a laser system (100) for generating a frequency modulated continuous wave, FMCW, light signal (112), the system (100) comprising: a tunable laser (110) for generating the FMCW light signal (112); an optical measurement unit (120) configured to receive a portion (114) of the FMCW light signal (112), and to output, via an optical hybrid coupler (122), at least two angle diversity signals (124) based on a difference between a first and second signal (114a, 114b) formed by splitting the portion (114) of the FMCW light signal (112) wherein the second signal (114b) is delayed relative to the first signal (114a), wherein a pair of signals of the at least two angle diversity signals (124) have a fixed phase shift relative to each other; and a control unit (130) configured to: receive the at least two angle diversity signals (124), estimate, based on the at least two angle diversity signals (124), a compensation needed for adjusting a non-linearity of a frequency chirp of the tunable laser (110), and output a corresponding control signal (132) to the tunable laser (110), wherein the control signal (132) is configured to improve a linearity of the frequency chirp.

Fig. 1

**Description**

<u>Technical field</u>

The present description relates to the field of Frequency Modulated Continuous Wave (FMCW) laser systems. More specifically, it pertains to methods and systems for achieving linear chirp in laser frequency modulation.

<u>Background</u>

Frequency Modulated Continuous Wave (FMCW) laser systems rely on fast laser frequency chirp to function effectively. The linearity of the frequency chirp is relevant for determining the laser system's performance. In particular, FMCW LIDAR systems calculate a distance between a transmitter and a target by utilizing the beating frequency of different time-delayed linear chirped signals. If the laser chirp is not linear, the beat spectrum becomes wider, which reduces the accuracy of the LIDAR range. Additionally, the peak frequency is directly proportional to the target distance, necessitating optical sources with high phase linearity, especially for long detectable distances, such as hundreds of meters.

High-quality linear chirp is typically achieved using an external modulator and fast sweeping RF sources. However, this method is complicated, incurs high optical loss, and is costly. An alternative approach is to achieve laser linear chirp by directly tuning the laser, known as direct modulation. However, the chirp linearity of direct modulation is not as high as that achieved with external modulation. The non-linearity in direct modulation is influenced by various laser states, including temperature, chirp speed, chirp range, and laser driving voltage.

In applications, where environmental conditions can vary significantly, a control loop is necessary for chirp linearization in FMCW LIDAR systems. However, known methods involve a large system with long fibers and involves complex digital signal processing (DSP).

Hence, there is a need for a more efficient solution to achieve high-quality linear chirp in FMCW laser systems.

<u>Summary</u>

An objective of the present description is to provide a method and system for achieving high-quality linear chirp in laser systems configured to generate FMCW light signals.

Another objective is to enable simplification of a system architecture of FMCW laser systems, such as FMCW LIDAR systems.

A further objective is to enable enhanced robustness and reliability in laser systems for generating FMCW light signals by minimizing or at least reducing the impact of varying environmental conditions on chirp linearity.

These and other objectives are at least partly met by the invention as defined in the independent claims. Preferred embodiments are set out in the dependent claims.

According to a first aspect, there is provided a laser system for generating a frequency modulated continuous wave, FMCW, light signal. The system comprises:

a tunable laser for generating the FMCW light signal;
an optical measurement unit configured to receive a portion of the FMCW light signal, and to output, via an optical hybrid coupler, at least two angle diversity signals based on a difference between a first and second signal formed by splitting the portion of the FMCW light signal wherein the second signal is delayed relative to the first signal, wherein a pair of signals of the at least two angle diversity signals have a fixed phase shift relative to each other; and
a control unit configured to:

receive the at least two angle diversity signals,
estimate, based on the at least two angle diversity signals, a compensation needed for adjusting a non-linearity of a frequency chirp of the tunable laser, and
output a corresponding control signal to the tunable laser,

wherein the control signal is configured to improve a linearity of the frequency chirp.

The laser system comprises an optical measurement unit that is configured to output at least two angle diversity signals. The optical measurement unit determines the angle diversity signals based on a portion of the FMCW signal and a delayed version of the portion of the FMCW signal. This implies that the angle diversity signals may represent a beat signal formed by interference of the first and second signals.

Thanks to measurement of the angle diversity signals, a simple processing may be performed for determining an adjustment of a non-linearity of the frequency chirp. The angle diversity signals may be processed to easily determine a frequency or phase of the beat signal, which in turn represents a change of frequency in the chirp. This enables determining a linearity of the frequency chirp quickly and with high accuracy.

Thanks to the high accuracy in determining the frequency/phase of the beat signal, a short delay of the second signal may be used. The delay of the second signal may be provided by physically guiding the second signal along an optical path. Thanks to the laser system allowing a short delay to be used, the laser system may also be compact as there is no need for providing a long optical path.

Hence, there is enabled a laser system for generating FMCW light signals using a simplified system architecture. The laser system further has reduced optical loss, and minimized impact on chirp linearity due to varying environmental conditions. Additionally, the system has high capability for using long chirp periods typically associated with relatively large nonlinearities, since the system ensures that non-linearity of the chirp is mitigated.

The non-linearity of the frequency chirp may be attributed to factors such as bandwidth limitations of a driver, and non-linear characteristics of the tunable laser, among other causes.

By the term "tunable laser" is here meant any unit, tunable device and/or element that can emit at least partially coherent light. The tunable laser may comprise a laser diode, e.g., configured to generate an optical carrier signal. The optical carrier signal is generated in the form of laser light (i.e., the FMCW light signal).

In this disclosure the term "light" should be allowed a broad interpretation, not limited to visible electromagnetic radiation. Rather, the term "light" may also include for example ultra-violet light and infra-red light.

The tunable laser may comprise a frequency modulation module configured to modulate a frequency of the optical carrier signal. It serves to mention that the frequency modulation module may be external to a laser source, such that the frequency modulation may be performed on the laser light output from the laser source. Alternatively, the frequency modulation module may form part of the laser source, such that the frequency modulation may be performed within the laser source. By way of example, the frequency modulation may be performed by direct frequency modulation of the laser source.

Furthermore, the laser system may be integrated onto a single semiconductor chip. The laser system enables a compact (e.g., on-chip integratable) solution for laser linear chirp generation with reduced digital signal processing (DSP) complexity. The estimation of needed compensation and output of the control signal configured to improve the linearity of the frequency chirp, may, e.g., be realized using a small size architecture that can be integrated onto a photonic integrated circuit (PIC). In other words, some or all of the components of the laser system may be integrated on a PIC.

The DSP complexity is, e.g., reduced by phase accumulation, provided by splitting the portion of the FMCW light signal such that the second signal is delayed relative to the first signal. Particularly, the usage of angle diversity signals, and detection and processing thereof by the control unit, enables evading complex DSP architectures. Hence, lower DSP complexity is enabled by avoiding complex Hilbert transform-based approaches in a frequency domain.

In addition, the laser system enables an adaptive control loop which may be performed in real-time, enabling chirp linearization of FMCW light signals. Especially, adaptive non-linearity monitoring and control can deal with the non-linearity of the frequency chirp changing due to varying (external) conditions. Real-time chirp tracking enables a fast control loop, which may involve chirp calculation on a sample-by-sample basis, such that instantaneous phase of the beat signal may be determined.

With 'sample' may here be meant data collected at specific intervals, as compared to frames which may relate to one or more chirps. A number of samples within a frame may relate to a frequency at which a time-domain waveform is sampled to derive the chirp (the rate of sampling may be well above the Nyquist limit). Typically, a chirp may be considered as a frame, e.g., with one up-chirp representing one frame and one down-chirp representing another.

Thus, calculations of a sample-by-sample basis may involve sequentially processing of samples, as compared to a frame-by-frame basis, where a complete set of samples (frame) would be processed together.

The number of samples in a frame may depend on the sampling rate. For instance, in FMCW LIDAR applications, the chirp speed may range from 3 to Nx10GHz within 50 microseconds, where N may be an integer representing the multiple of 10 GHz. In high-speed datacom applications, the chirp speed may range from 1 to Nx100GHz within 50 to 100 picoseconds. Hence, there is enabled a compact, adaptive, and integrated laser linear chirp control loop.

Additionally, the laser system enables direct and facilitates tracking of both positive and negative chirps. This may be achieved by the angle diversity signals providing information of which of the first and the second signals that has a higher frequency.

The control unit may further be configured to estimate an instantaneous frequency of the FMCW light signal. The estimation of the instantaneous frequency may be a phase-based estimation. In other words, the instantaneous frequency may be estimated based on the phase of the angle diversity signals. Thus, the frequency at any given moment may be determined by analyzing phase changes of the angle diversity signals over time. By monitoring how the phase evolves, it is possible to calculate the frequency variations of the FMCW light signal.

The optical measurement unit may comprise an interferometer structure, such as an asymmetric Mach-Zehnder interferometer (AMZI), configured to split the portion of the FMCW light signal into the first signal and the second signal, and to delay the second signal relative to the first signal.

In other words, the interferometer structure may be configured to divide a portion of the FMCW light signal into two separate signals. One of these signals is delayed in comparison to the other. The asymmetric Mach-Zehnder interferometer is a specific configuration of such an interferometer structure that allows for precise control over the splitting and delaying of light signals.

Hence, by creating a controlled delay between the first and second signal, accurate measurements can be provided. Additionally, the use of an AMZI may enable reduction in noise and increased clarity of measurements.

Finite difference techniques may be used for estimating the instantaneous frequency of the light signal. Such a technique benefits from smaller delays between the first and second signals, which lead to higher accuracy as a finite difference approximation closely corresponds to a derivative (instantaneous frequency) of the light signal. The delay can be adjusted based on the rate of laser frequency changes. However, for slower frequency changes, extremely small delays (e.g., nanoseconds to microseconds) are not necessary to maintain good accuracy.

For high-speed applications, such as frequency modulation in data communication systems (e.g., 50GBaud/s On-Off Keying), the delay may be less than 20 picoseconds (e.g., around 10 picoseconds).

Smaller delays may result in a more precise instantaneous frequency estimations, but they may also reduce the signal-to-noise ratio (SNR). Therefore, selecting an appropriate delay may balance accuracy and performance, ensuring optimal results for various applications. Hence, the delay caused by the interferometer structure may be configured differently depending on whether the light signal from the chirped laser source involves slow or rapid frequency changes.

In an example, the second signal may be configured to be delayed relative to the first signal with a relatively short delay. The second signal may be delayed relative to the first signal by a delay line having a length within a range between 1 cm and 150 cm, preferably between 5 cm and 50 cm, more preferably between 10 cm and 20 cm. Hence, a relatively short length of the delay line may be used.

For example, a path length difference of 10 cm for the first and second signal may enable accurate measurements. A 25 cm path length difference may provide almost the same accuracy as a 200 cm difference.

For on-chip designs, path length differences of less than 25 cm may be considered to maintain compactness and integration efficiency. A compact form factor is thus enabled, e.g., with a delay line length in the range of tens of centimeters.

A 10 cm path length difference may correspond to a time delay of approximately 0.3 nanoseconds in free space (or 0.5 nanoseconds in a fiber), while a 25 cm difference may result in a time delay of about 0.8 nanoseconds in free space (or 1.2 nanoseconds in a fiber).

Generally, the optical measurement unit may be configured to split the portion of the FMCW light signal into the first light signal propagating in a first path and the second light signal propagating in a second path. The second path may have a preset delay in relation to the first path. By way of example, the preset delay may be provided by the first path and the second path having different optical path lengths. The preset delay may, for example, be a known preset delay. The preset delay may be provided by one of the first and the second paths being longer that the other path. A longer path may be achieved by guiding the light in a loop, a spiral or the like, so that a long path length may be provided in a compact solution.

After having passed the first and the second paths respectively, the first and the second light signals are combined again. When the first and second light signals are combined, interference between the light signals may occur. The resulting combined signal may form a beat frequency. The beat frequency is linked to the preset delay of the optical measurement unit. By way of example, the beat frequency may be proportional to the preset delay.

The optical measurement unit may further comprise the optical hybrid coupler. The optical hybrid coupler may hence be configured to output the at least two angle diversity signals based on an interference between the first signal and the second signal.

The optical hybrid coupler may, e.g., be a 120-degree optical hybrid coupler or a 90-degree optical hybrid coupler.

A 120-degree optical hybrid coupler is a device that splits an input optical signal into three output signals (i.e., three angle diversity signals) with a fixed phase difference of 120 degrees between each pair of outputs. The 120-degree phase shift ensures that the signals are evenly spaced in phase.

A 90-degree optical hybrid coupler, also known as a quadrature coupler, splits an input signal into two output signals (i.e., two angle diversity signals) with a 90-degree phase difference between them.

Further, the optical measurement unit may comprise at least two photodiodes for detecting the at least two angle diversity signals.

The photodiodes may generally be any unit or device comprising a light sensitive element configured to detect light intensity impinging onto the light sensitive element, to produce an electrical signal in response thereof, and to allow read-out of the electrical signal.

The photodiodes may be single ended and/or balanced photodiodes (BPDs). By a balanced photodiode is here meant a device comprising two photodiodes connected in series. When the two photodiodes detect the same level of light, i.e. when their generated electric signals are equal, their electric signals cancel each other out. By such arrangement, detection of small differences in light level on the two photodiodes may be provided.

In particular, single-ended photodiodes detect the intensity of the angle diversity signals directly from the output of the optical hybrid coupler. In contrast, a balanced photodiode measures a difference in intensity between two outputted angle diversity signals (i.e., a pair of outputs), which may help to cancel out common-mode noise and improve the signal-to-noise ratio.

In general, the optical measurement unit may comprise three components: an optical AMZI with short arm length difference (such as 20 cm or tens of centimeters, e.g., to support an on-chip structure), an optical hybrid coupler, and optical detection (e.g., single-ended photodiodes or a BPD).

In terms of the optical hybrid coupler and detection of the angle diversity signals, a 120-degree hybrid coupler-based design may comprise (but not limited to) a 3x3 MMI followed by three single-ended photodiodes. Alternatively, a 90-degree hybrid coupler may be used, e.g. by implementing a 2x4 or 4x4 MMI followed by two BPDs. Generally, the optical hybrid coupler may comprise at least one MMI (or directional coupler).

By incorporating at least one MMI or directional coupler in the optical hybrid coupler, precise control over the splitting and combining of light signals is provided. Additionally, the use of such couplers may can enable a compact and integratable design (e.g., suitable for on-chip integration), i.e., reducing size and complexity of the optical measurement unit.

The 90-degree hybrid coupler structure may reduce phase noise by using balanced detection. On the other hand, the 120 degree hybrid coupler-based approach may have a less complex MMI structure, less fabrication errors, and/or a smaller footprint. The 120-degree optical hybrid coupler design may use single-ended photodiodes (as compared to BPDs), hence, e.g., reducing number of components required. The reduction of components also means fewer radio frequency connections are needed.

Additionally, the use of single-ended photodiodes may allow for simpler transimpedance amplifier (TIA) structures. Single-ended photodiodes generate a current that is directly proportional to the incident light, which can be converted to a voltage using a single TIA. This conversion process thus requires fewer components and connections compared to BPD configurations, which involve differential signals.

The fixed phase shift may be the same between any pair of the at least two angle diversity signals.

In other words, the fixed phase shift between any two of the at least two angle diversity signals can be identical, such as 90 degrees or 120 degrees. This means the phase difference between each pair of angle diversity signals remains constant and equal, whether it is 90 degrees, 120 degrees, or another phase angle.

The fixed phase relationship may ensure that the angle diversity signals maintain a uniform phase alignment. The fixed phase shift may be enabled by the optical hybrid coupler. For example, a 90-degree hybrid coupler may provide a fixed phase shift of 90 degrees, while a 120-degree hybrid coupler may provide a fixed phase shift of 120 degrees between the angle diversity signals outputted to the control unit.

The control unit may be configured to repeatedly output a control signal to the tunable laser. Conversely, the control signal may be configured to repeatedly improve the linearity of the frequency chirp. In other words, the control unit may in a recurrent manner output a control signal based on the estimated compensation needed for adjusting the non-linearity of the frequency chirp of the tunable laser.

Hence, the tunable laser may be continuously updated, i.e., the non-linearity of the frequency chirp of the tunable laser may be continuously linearized or compensated for.

The repeat rate may be relatively low, e.g., every ten seconds. However, for unstable lasers or for lasers susceptible to changes in, e.g., chirp-scheme and/or environmental temperature, the non-linearity of the frequency chirp of the tunable laser may be monitored or detected, e.g., when the non-linearity exceeds a threshold. Hence, the control signal may be configured to improve the linearity of the frequency chirp as required to optimize performance of the tunable laser.

The threshold may be defined by a figure of merit (i.e., key performance indicator, KPI, value). For example, the figure of merit (r) may be extracted from a formula such as $1 - r^2 = 12 \cdot \left(\frac{v_{nl,rms}}{f_{exc}}\right)^2$, where $v_{nl,rms}$ [Hz] is the root mean squared of a non-linear component of the (ramp up or ramp down) frequency chirp, and $f_{exc}$ [Hz] is excursion frequency of the tunable laser.

In an example, if the figure of merit exceeds 1 e-5, the linearity of the frequency chirp may be deemed to not be linear enough. The threshold may indicate that the linearity of the frequency chirp is in need of adjustments or improvements.

The monitoring of non-linearity may be adaptive. In other words, if non-linearity is detected, the linearity may be improve at a faster rate.

The control unit may further be configured to calculate a frequency and/or phase corresponding to the at least two angle diversity signals by creating a vector and calculating an (phase) angle of the vector. The frequency and/or phase may be the instantaneous frequency or phase (angle), respectively.

The vector may be created by a sum of the at least two angle diversity signals. For example, the angle diversity signals may be rotated in relation to each other in the complex plane.

In the case of a 120 degree optical hybrid coupler, a first (S1), second (S2), and third (S3) angle diversity signal may be provided, hence, the vector may be formed by S1 + S2 *exp(j2π/3) + S3 *exp(j4π/3), where j is the complex number. Thus, the second angle diversity signal has been rotated 120 degrees in the complex plane relative to the first angle diversity signal, and the third angle diversity signal has been rotated 120 degrees in the complex plane relative to the second angle diversity signal.

Similarly, for a 90-degree hybrid coupler, wherein the angle diversity signals are detected by BPDs, thus forming two detected angle diversity signals (S1, S2), the vector may be represented by S1 + S2 *exp(jπ/2). Thus, the second angle diversity signal has been rotated 90 degrees in the complex plane relative to the first angle diversity signal.

The angle (i.e., phase angle) of the resultant vector may be extracted, e.g., using a vector angle calculator. Further, the phase angles may be unwrapped using a method that involves adding or subtracting multiples of $2\pi$ to eliminate discontinuities and maintain a smooth transition between successive phase values. Such an unwrapping process may convert phase angles that initially fall outside a standard range of $-\pi$ to $\pi$ into a continuous sequence.

The laser system may further comprise an Analog-to-Digital Converter, ADC, and a Digital-to-Analog Converter, DAC. The ADC may be configured to convert an analog input signal, to the control unit, based on the at least two angle diversity signals, into a digital signal. Further, the control unit may be configured to convert the digital signal into a complex domain, calculate a phase angle, estimate non-linearity, perform pre-distortion calculations, and/or output a processed digital signal, wherein the DAC may be configured to convert the processed digital signal into the control signal.

Hence, there is enabled complex-domain phase calculation and accumulation, as compared to real-domain. The use of complex signals may enable real-time and positive/negative chirp measurements. Further, smaller time delay is enabled without sacrificing accuracy in estimation performance (e.g., at chirp edges between up- and down-ramps and vice versa).

The at least two angle diversity signals may be analog signals. The at least two angle diversity signals may hence be converted to digital signals by the ADC. In other words, the ADC may be configured to convert the detected signal, from an analog detected signal to a digital detected signal, and to send the digital detected signal to the control unit.

Further, the laser system may comprise a TIA configured to amplify the detected signals (e.g., one TIA per detected signal). Hence, amplified signals may be sent to the ADC.

ADCs may be associated with at least two photodiodes, e.g., configured to detect the at least two angle diversity signals. For example, each diversity signal may be converted into a digital signal by a respective ADC.

The digital (i.e., converted) angle diversity signals may then be sampled by the control unit. In turn, the control unit may convert the digital signals into the complex domain.

In other words, a complex signal may be synthesized using a plurality of real (digital) signals, e.g., at least two real signals. The complex signal may for example be represented by a vector, e.g., as described above.

Based on the complex signal, the (phase) angle may be calculated.

It is appreciated that wavelengths of the angle diversity signals may be non-linearly mapped to a driving voltage of the tunable laser, and that mapping between voltage and time is a linear curve. Therefore, the relation between (phase) angle and time is a non-linear curve. However, a linear angle-time (i.e., angle-voltage) mapping is needed for linear frequency chirp. Hence, using the measured non-linear angle-time mapping, the non-linearity of the frequency chirp can be estimated. In an example, the non-linearity may be estimated by unwrapping the phase angle and comparing it with a linear response (i.e., by measuring a deviation of the actual output from an output predicted by a linear model).

Based on the estimated non-linearity, a pre-distorted voltage ramp can be obtained. The pre-distorted voltage ramp may, e.g., be obtained from the estimated non-linearity by least-mean-squared or linear interpolation. For example, the chirp linearization may be realized in an iterative manner to obtain a higher linear phase. For this, the calculated voltage ramp (up and down) may be stored and applied for a next iteration.

The calculated pre-distortion curve may in turn be used to update the driving voltage of the tunable laser. In particular, the outputted processed digital signal may comprise the pre-distortion curve. Hence, via the DAC, the pre-distortion curve may be converted into the control signal.

The control unit may further comprise a reference signal, wherein the control unit and the measurement unit forms an Opto-Electronic Phase-Locked Loop, OEPLL, configured to stabilize a frequency and phase of the FMCW light signal.

In other words, OEPLL is a fast real-time control loop that may lock laser chirp to a reference linear signal. The reference signal may, e.g., be a reference ramp signal, which may change slower than a feedback speed (e.g., 100 times slower). An estimated error between a measured non-linear angle-time mapping and the reference ramp signal is used for further calculation such as proportional amplification, integral calculation, and sum for non-linearity compensation.

Hence, OEPLL enables a faster feedback control. OEPLL may, e.g., be used for fast changing lasers.

According to a second aspect, there is provided a LIDAR system comprising a laser system according to the first aspect, and a LIDAR detection unit, wherein the LIDAR detection unit is configured to receive a reflected light signal based on the FMCW light signal.

This aspect may generally present the same or corresponding advantages as the first aspect.

Hence, a system for non-linearity estimation (and pre-distortion) for direct laser frequency chirp in a LIDAR system is enabled. Particularly, the LIDAR system enables adaptive frequency chirp non-linearity monitoring and control for managing the non-linearity, which non-linearity may vary in response to varying conditions such as external temperatures.

The LIDAR system may further be realized using a small size architecture that can be integrated onto a chip, such as a PIC. The optical (non-linearity) measurement unit may be integrated onto one and the same LIDAR PIC, such as compactly co-packaged with the control unit into a same LIDAR mainboard.

As discussed in relation to the first aspect, a simplification in complexity of digital signal processing is enabled, e.g., by angle-diversity detection and phase accumulation. Especially, frequency domain processing approaches may be avoided, i.e., high digital signal processing complexity-based Hilbert transform approaches may be avoided.

The tunable laser of the laser system may comprise an optical beam splitter arranged in a path of the FMCW light signal, and be configured to split the FMCW light signal into a LIDAR emission signal which may be emitted from the LIDAR system, and the portion of the FMCW light signal being provided to the optical measurement unit of the laser system. Thus, the "portion of the FMCW light signal" is the part of the light being split off from the FMCW light signal, and directed to the optical measurement unit. The remainder of the FMCW light signal then forms the LIDAR emission signal which may be emitted from the LIDAR system, for example towards a target.

In other words, the LIDAR system may split the FMCW light signal from the tunable laser into two parts: a Local Oscillator (LO) signal and a Transmission (Tx) signal. The FMCW light signal may, e.g., be split by a beam splitter. Typically, the LO signal may constitute a small portion of the light signal (e.g., 1%), while the Tx signal may comprise a majority of the light signal (e.g., 99%). The Tx signal is used to detect distance and is reflected back from a target to the LIDAR detection unit.

In the detection unit, the LO signal and the reflected light signal may be coupled together for coherent detection. This process may, for example, involve the use of receiver optics for collecting the reflected light signal, a 2x2 coupler for combining the LO and reflected signal, a balanced photodetector for detecting the combined signal and converting it into an electrical signal, and/or a signal processing unit for analyzing the electrical signal, e.g., to determine a distance, velocity, and/or other characteristics of a target.

Further, the LIDAR system may comprise an optical phased array for facilitating the LIDAR system to dynamically steer the Tx signal across a field of view.

The LIDAR system may be integrated into an automotive vehicle, and configured to provide real-time distance and velocity data of surroundings of the automotive vehicle.

In other words, the LIDAR system can be incorporated into a vehicle to continuously monitor and measure the distance and speed of objects around the vehicle in real-time. The LIDAR system may be implemented in devices or systems such as robotics, drones, and various industrial applications, e.g., to provide real-time distance and/or velocity data.

The real-time distance and velocity data enable the vehicle to detect and respond to obstacles and other vehicles promptly. Furthermore, when implemented in other devices such as robotics and drones, the LIDAR system enhances their ability to navigate environments and avoid obstacles.

Further, a linear frequency chirp in a LIDAR system may improve range resolution, e.g., allowing for more accurate measurement of distances to closely spaced objects. Additionally, a linear frequency chirp may enhance a signal-to-noise ratio and facilitate detection of weak reflections from distant objects.

According to a third aspect, there is provided a method for improving a linearity of a frequency chirp of a frequency modulated continuous wave, FMCW, light signal, the method comprises:

generating, via a tunable laser, the FMCW light signal;
receiving, at an optical measurement unit, a portion of the FMCW light signal;
outputting, via an optical hybrid coupler, at least two angle diversity signals based on a difference between a first and second signal formed by splitting the portion of the FMCW light signal wherein the second signal is delayed relative to the first signal, wherein a pair of signals of the at least two angle diversity signals have a fixed phase shift relative to each other;
receiving, at a control unit, the at least two angle diversity signals;
estimating, based on the at least two angle diversity signals, a compensation needed for adjusting a non-linearity of a frequency chirp of the tunable laser; and
outputting a corresponding control signal to the tunable laser,
wherein the control signal improves a linearity of the frequency chirp.

This aspect may generally present the same or corresponding advantages as the first and second aspects.

The step of estimating the compensation needed for adjusting the non-linearity of the frequency chirp of the tunable laser may comprise: converting an analog signal, based on the at least two angle diversity signals, into a digital signal, converting the digital signal into a complex domain, calculating a phase angle, estimating a non-linearity,

performing pre-distortion calculations, outputting a processed digital signal, and/or converting the processed digital signal into the control signal.

The analog signal may be converted into the digital signal via an ADC. The ADC may be a plurality of ADCs. Further, a DAC may convert the processed digital signal into the control signal.

The digital signal may be converted into the complex domain by forming a vector in the complex plane, based on the angle diversity signals.

The phase angle may be calculated by calculating an angle of the vector in the complex plane.

The phase angle may be mapped against time, such that a non-linearity of the frequency chirp can be estimated based on a (non-linear) curve of the angle-time mapping. For example, the non-linearity may be estimated by unwrapping the phase angle and comparing it with a linear response (i.e., by measuring a deviation of the actual output from an output predicted by a linear model).

Based on the estimated non-linearity, the pre-distortion calculations may be performed by forming a pre-distorted voltage ramp, e.g. by least-mean-squared or linear interpolation.

In turn, the calculated pre-distortion curve may be used to update the driving voltage of the tunable laser, thereby improving a linearity of the frequency chirp.

The method may further comprise repeating the steps of the method as set forth in the second aspect.

In other words, a control signal may be repeatedly outputted to the tunable laser such as to repeatedly improve the linearity of the frequency chirp. The control unit may continuously output a control signal based on the estimated compensation needed for adjusting the non-linearity of the frequency chirp of the tunable laser.

The method may further comprise, at the optical measurement unit: splitting, at an interferometer structure, the portion of the FMCW light signal into the first signal and the second signal, delaying the second signal relative to the first signal; and detecting, via at least two photodiodes, the at least two angle diversity signals.

In other words, the optical measurement unit may comprise an interferometer structure for splitting the portion of the FMCW light signal.

The portion of the FMCW light signal may, e.g., be split such that 50% of the portion of the FMCW light signal is delayed relative the remaining 50%. However, other splitting ratios can also be used. In principle, the first and second signals (after the delay line) should be equal. If the delay line has high loss, more power may be allocated to the second signal with the delay line to compensate for the loss. If the power is not equally split, a Signal-to-Noise Ratio (SNR) decreases of the recombined signal. However, the method may still function effectively with an unequal split, but the performance degrades as the SNR decreases.

Effects and features of the first, second, and third aspects are largely analogous. Examples mentioned in relation to the first, second, and third aspects are largely compatible. It is further noted that the disclosure relates to all possible combinations of features unless explicitly stated otherwise.

Brief description of the drawings

The above, as well as additional objects, features, and advantages of the present description, will be better understood through the following illustrative and non-limiting detailed description, with reference to the appended drawings. In the drawings like reference numerals will be used for like elements unless stated otherwise.

Fig. 1 schematically illustrates a laser system for generating an FMCW light signal where a control signal is configured to improve a linearity of the frequency chirp of the FMCW light signal.
Fig. 2 schematically illustrates an optical measurement unit forming a 120-degree optical hybrid coupler.
Fig. 3 schematically illustrates an optical measurement unit forming a 90-degree optical hybrid coupler.
Fig. 4 shows a block diagram of signal processing steps.
Fig. 5A schematically illustrates a LIDAR system comprising a laser system.
Fig. 5B illustrates schematic graphs of linear and non-linear frequency chirp.

Detailed description

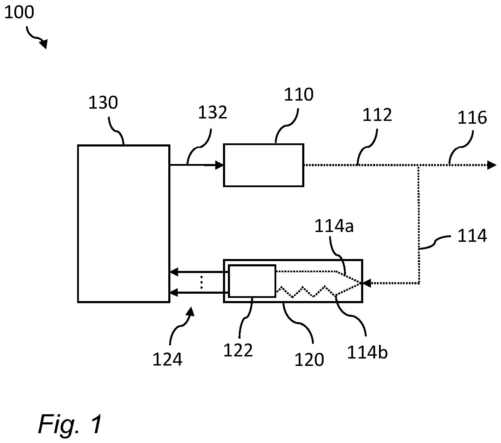

Fig. 1 illustrates a laser system 100 for generating a frequency modulated continuous wave, FMCW, light signal 112. The system 100 comprises a tunable laser 110 for generating the FMCW light signal 112; and an optical measurement unit 120 configured to receive a portion 114 of the FMCW light signal 112, and to output, via an optical hybrid coupler 122, at least two angle diversity signals 124 based on a difference between a first and second signal 114a, 114b formed by splitting the portion 114 of the FMCW light signal 112 wherein the second signal 114b is delayed relative to the first signal 114a, wherein a pair of signals of the at least two angle diversity signals 124 have a fixed phase shift relative to each other.

The laser system 100 further comprises a control unit 130 configured to: receive the at least two angle diversity signals 124, estimate, based on the at least two angle diversity signals 124, a compensation needed for adjusting a non-linearity of a frequency chirp of the tunable laser 110, and output a corresponding control signal 132 to the tunable laser 110.

The outputted control signal 132 is configured to improve a linearity of the frequency chirp of the FMCW light signal 112 generated by the tunable laser 110.

The tunable laser 110 generating the FMCW light signal 112 may be a laser whose output frequency can be adjusted or varied over a range. The tunability may allow the laser to be tuned to produce an FMCW light signal 112 with linearized frequency chirp.

The portion 114, of the FMCW light signal 112, received by the optical measurement unit 120 may be relatively small compared to a remaining propagating portion 116 of the FMCW light signal 112. The portion 114 may for example be a small part (e.g., about 1%) of the FMCW light signal 112. Similarly, the remaining propagating portion 116 may correspond to about 99% of the FMCW light signal 112. However, these percentages are exemplary and may vary depending on specific requirements of the laser system 100. The division of the FMCW light signal 112 into the portions may be such that a sufficient amount of light is available for both measurements for linear chirp improvements and propagation to a target. The portion 114 may be separated from the FMCW light signal 112 using an optical beam splitter or a similar device, e.g. configured to direct a small fraction of the light towards the optical measurement unit 120 while allowing for a majority of the FMCW light signal to continue propagating.

The optical measurement 120 unit may be a non-linearity measuring module, e.g., based on an asymmetric Mach-Zehnder interferometer (AMZI) structure.

An AMZI structure may be an optical device configured to split light signal into two separate paths. These paths have different optical lengths and eventually recombine. By analyzing the interference pattern created when the light paths merge, the AMZI can detect changes in the optical path length difference.

In Fig. 1, the optical path of the second signal 114b is illustrated to be longer than the optical path of the first signal 114a (see jagged dashed line). However, the optical path of the first signal 114a may be longer than the optical path of the second signal 114b. Alternatively, the paths may comprise different materials. The different materials may affect the propagation speed of the signals 114a, 114b such that one of the first and second signal 114a, 114b is delayed relative to the other signal.

The optical paths of the first signal 114a and the second signal 114b may be provided by waveguides for guiding the first signal 114a and the second signal 114b, respectively. Thus, the optical measurement unit 120 may comprise a first waveguide for guiding the first signal 114a and a second waveguide for guiding the second signal 114b.

The optical hybrid coupler 122 is a device which may be used to combine or split optical signals. It typically consists of multiple input and output ports, allowing it to mix signals from different sources or distribute a single signal to multiple destinations. Hence, the optical hybrid coupler 122 operates based on the principle of interference, where the input optical signals are combined in such a way that their phases and amplitudes are manipulated to achieve the desired output. In Fig. 1, the input signals to the optical hybrid coupler 122 are the first and second signals 114a, 114b, and the output is the angle diversity signals 124.

Hence, light interference occurs within the optical hybrid coupler 122, such as within a multimode interference coupler. When the two light signals 114a, 114b, having traveled different optical lengths, recombine in the optical hybrid coupler 122, they interfere with each other. The interference pattern is a result of the phase difference between the two signals 114a, 114b. In an example, the optical hybrid coupler 122 may be a multi-mode interferometer (MMI). The optical hybrid coupler 122 may, for example, comprise at least one MMI.

The resulting combined light signals, i.e., the resulting angle diversity signals 124, may then be directed to photodiodes (not shown in Fig. 1). Each signal detected by the photodiodes may represent the interference outcome.

In Fig. 1, optical measurement unit 120 comprises the optical hybrid coupler 122 configured to output the at least two angle diversity signals 124 based on an interference (i.e., the difference) between the first signal 114a and the second signal 114b. However, it is appreciated that the optical hybrid coupler 122 may, e.g., be arranged separately to waveguides used for guiding the first and second signals 114a, 114b. Hence, the first and second signals 114a, 114b may be outputted from the waveguides and received by the optical hybrid coupler 122, which in turn outputs the at least two angle diversity signals 124 to the control unit 130.

The control unit 130 may repeatedly output a control signal 132 to the tunable laser 110. Hence, the control signal 132 may repeatedly improve the linearity of the frequency chirp. The repeatedly outputted control signal 130 may correspond to a repeatedly estimated compensation needed for adjusting the non-linearity of the frequency chirp of the tunable laser 110.

The control unit 130 may be a microcontroller, e.g. a simple microcontroller. In other words, the control unit 130 may have a low complexity and/or facilitate on-chip integration.

It should be realized that the control unit 130 may be implemented as a processing unit, such as a general-purpose processing unit, e.g., a central processing unit (CPU), which may execute instructions of one or more computer programs in order to implement functionality of the control unit 130. The control unit 130 may also or alternatively be implemented as firmware arranged e.g., in an embedded system, or as a specifically designed processing unit, such as an Application-Specific Integrated Circuit (ASIC) or a Field-Programmable Gate Array (FPGA). It should be realized that the control unit 130 may be implemented as a combination of hardware and software components.

Although not shown in detail in Fig. 1, the laser system 100 may be integrated onto a single semiconductor chip. In particular, all or some of the components of the laser system 100 may be integrated onto a single chip. For example, the optical measurement unit 120 and the controller 130 may be integrated on a same chip (such as a PIC being further provided with electronic circuitry). The tunable laser 110 may, for example, be arranged outside of the chip. However, it is appreciated that the tunable laser may further be arranged or integrated on the same chip as the optical measurement unit 120 and the controller 130.

The control unit 130 may further comprise a reference signal (not shown in Fig. 1), wherein the control unit 130 and the measurement unit 120 forms an Opto-Electronic Phase-Locked Loop, OEPLL, configured to stabilize a frequency and phase of the FMCW light signal 112.

OEPLL may be used for real-time lock of a laser frequency chirp to a certain ramp signal. The detected phase angles of the beat signal may then be compared with a reference ramp signal, which may change slower (e.g., at a rate of 1 kHz) than a feedback speed (e.g., 100 kHz). A corresponding difference (i.e. error) based on the comparison may be used for further calculations such as proportional amplification, integral calculation, and/or sum for non-linearity compensation.

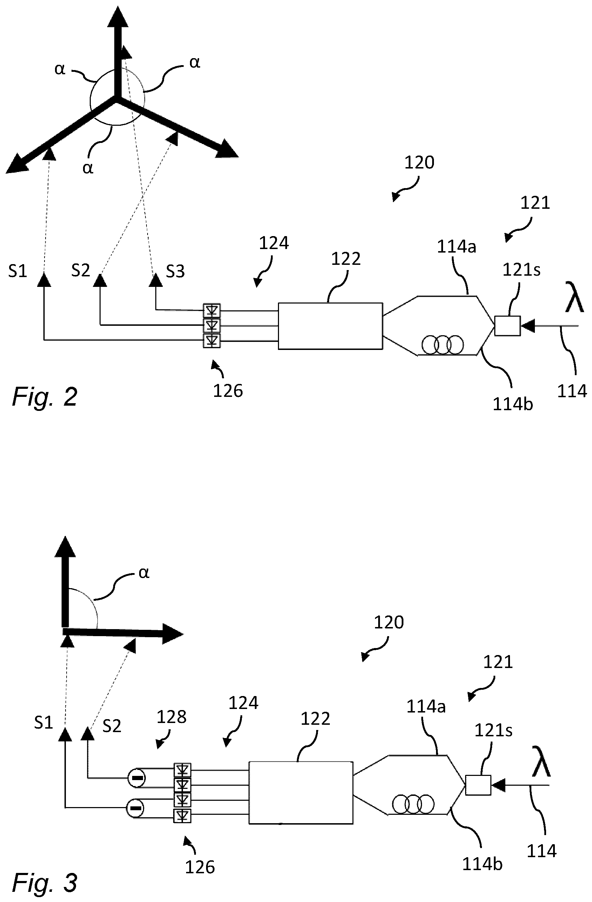

In Fig. 2, an optical measurement unit 120 is schematically illustrated.

A portion 114 (also denoted λ) of a FMCW light signal is received by an interferometer structure 121 configured to split the portion 114 of the FMCW light signal into a first signal 114a and the second signal 114b. The portion 114 of the FMCW light signal is split into the first and second signals 114a, 114b by a splitter 121s or a 1x2 coupler. The splitter may, e.g., be a beam splitter. In an example, the portion 114 of the FMCW light signal is split 50-50, such that the first signal 114a corresponds to 50% of the portion 114 and the second signal 114b corresponds to 50% of the portion 114 of the FMCW light signal.

The interferometer structure 121 further comprise optical paths configured to delay the second signal 114b relative to the first signal 114a. Here, the optical path corresponding to the second signal 114b is illustrated to form a delay line by having a looped optical path (e.g., fiber loops), i.e. a longer optical path than the optical path of the first signal 114a. The longer optical path may, e.g., be about 20 cm longer than the shorter optical path. However, it is appreciated that the delay may be achieved through any suitable delay line or signal delay approach, e.g., by having the signals 114a, 114b propagating through materials with different refractive indices.

The portion 114 of the FMCW light signal 112 may be represented by an electric field, E(t) with unit amplitude, the first signal 114a may be represented by an electric field, $E_1(t)$, and the second signal 114b may be represented by an electric field, $E_2(t)$. These signals may be represented as:

$$E(t) = \cos[\phi_{FMCW}(t)],$$

$$E_1(t) = \sqrt{2}/2\cos[\phi_{FMCW}(t)],$$

$$E_2(t) = \sqrt{2}/2\cos[\phi_{FMCW}(t - \tau)],$$

where $\phi_{FMCW}(t)$ is a phase of the FMCW light signal and $\tau$ is a time delay in the longer optical path.

The optical hybrid coupler 122 in Fig. 2 is a 120-degree optical hybrid coupler 122. The 120-degree optical hybrid coupler 122 splits an input optical signal into three output angle diversity signals 124 with a fixed phase difference of 120 degrees between each pair of outputs. In particular, as seen in Fig. 2, the fixed phase shift ($\alpha$) is the same between any pair of the angle diversity signals 124. Specifically, in Fig. 2, the fixed phase shift is 120 degrees (i.e., $\alpha$=120°).

Although not shown explicitly in Fig. 2, the 120-degree hybrid coupler 122 may be based on a directional coupler or a 3x3 MMI, e.g., a 3x3 multimode interference coupler. The 3x3 MMI coupler may utilize multimode interference to split and combine input optical signals. The 3x3 MMI coupler may comprise a multimode waveguide section where multiple modes interfere constructively and destructively, resulting in the desired power distribution among output ports of the 120-degree hybrid coupler 122.

In the case of a 3x3 MMI coupler, the first and second signal 114a, 114b may be inputted into the 3x3 MMI coupler in any two of its three input ports. Hence, one input port of the 3x3 MMI coupler may be left unused or may not receive any signal. In an example, a 2x3 MMI coupler may be utilized.

In the configuration shown in Fig. 2, the optical hybrid coupler 122 is designed to achieve a 120-degree phase shift between the output signals (i.e., angle diversity signals 124). This may be accomplished by selecting dimensions of the multimode waveguide, such as its width and length, to ensure a correct/desired interference pattern is achieved. The 120-degree hybrid coupler 122 thus provides three output angle diversity signals 124 with equal amplitude signals that are phase-shifted by 120 degrees relative to each other.

Further, in Fig. 2, the angle diversity signals 124 are detected by three photodiodes 126. The optical measurement unit 120 comprising the 120-degree optical hybrid coupler 122 may, for example, utilize three single-ended photodiodes 126. Each photodiode 126 is positioned to detect the intensity of light from a respective output (i.e., a respective angle diversity signal 124) of the 120-degree optical hybrid coupler 122.

In this setup, the 120-degree optical hybrid coupler 122 splits the incoming signals 114a, 114b into three separate paths, each with a 120-degree phase difference. The photodiodes 126 are then used to form three detected angle diversity signals S1, S2, S3 based on the respective signals from the three separate paths. The angle diversity signals may be represented as:

$$S_1(t) = \frac{A_{pd}}{6}\{1 + \cos[\phi_{FMCW}(t) - \phi_{FMCW}(t - \tau)]\},$$

$$S_2(t) = \frac{A_{pd}}{6}\left\{1 + \cos\left[\phi_{FMCW}(t) - \phi_{FMCW}(t - \tau) - \frac{2\pi}{3}\right]\right\},$$

$$S_3(t) = \frac{A_{pd}}{6}\left\{1 + \cos\left[\phi_{FMCW}(t) - \phi_{FMCW}(t - \tau) - \frac{4\pi}{3}\right]\right\},$$

where $A_{pd}$ is a responsivity of the photodiode 126.

In a particular example, the optical measurement unit 120 comprising the 120-degree optical hybrid coupler 122 may utilize three photodiodes, and/or three TIAs (not shown).

Fig. 3 shows another optical measurement unit 120. To avoid undue repetition, it is appreciated that Fig. 3 illustrates a similar optical measurement unit 120 as discussed in relation to Fig. 2. However, in Fig. 3, the optical hybrid coupler 122 is a 90-degree optical hybrid coupler 122. This type of hybrid coupler is designed to create a 90-degree phase shift between the output signals.

The 90-degree optical hybrid coupler 122, splits the input signals 114a, 114b into four output signals (i.e., four angle diversity signals 124).

The 90-degree optical hybrid coupler may use the principle of multimode interference to achieve this split. In particular, although not shown explicitly in Fig. 3, the 90-degree hybrid coupler 122 may comprise a 2x4 MMI, a 4x4 MMI, or a directional coupler.

The four output signals from the 90-degree optical hybrid coupler 122 are then, respectively, detected by four photodiodes 124. These photodiodes 124 are arranged to form two balanced photodiodes 128. Each balanced photodiode 128 measures the difference in light intensity between two of the output angle diversity signals 124 (this differential measurement may help to cancel out common-mode noise and enhance accuracy of the detected signals).

The balanced photodiodes 128 process the four output angle diversity signals 124 to produce two detected angle diversity signals, S1 S2. These detected angle diversity signals, S1, S2 have a 90-degree phase difference between them (i.e., $\alpha$=90°). The transformation from four signals to two signals is achieved by the balanced photodiodes 128, which combine the intensity information from the pairs of outputted angle diversity signals to generate the detected angle diversity signals S1, S2.

In a particular example, the optical measurement unit 120 comprising the 90-degree optical hybrid coupler 122 may utilize four photodiodes forming two balanced photodiodes, and/or two TIAs (not shown).

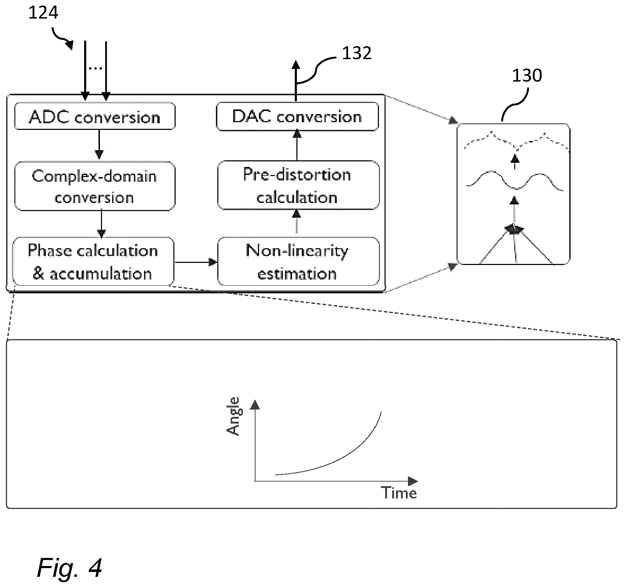

Fig. 4 illustrates a block diagram of signal processing steps of the laser system 100.

From Fig. 4, the laser system 100 is seen to comprise an ADC, and a DAC. The ADC may be arranged within or outside of the control unit 130, whereas the DAC may be arranged within our outside of the control unit 130.

As illustrated in Fig. 4, the ADC converts analog input signals, to the control unit 130, based on the at least two angle diversity signals 124, into a digital signal.

Further, the control unit 130 converts the digital signal into a complex domain. The digital signal may be represented in the complex domain as a vector in the complex plane. Based on the detected angle diversity signals represented above for the 120-degree optical hybrid coupler, a complex signal $IQ(t)$ may be represented as:

$$IQ(t) = S_1(t) + S_2(t) \times e^{\frac{j2\pi}{3}} + S_3(t) \times e^{\frac{j4\pi}{3}} = \frac{A_{pd}}{4} e^{j[\phi_{FMCW}(t) - \phi_{FMCW}(t-\tau)]}.$$

A phase component may be extracted of the beat signal (e.g., S1). In particular, as described herein, angle diversity signals (i.e., phase diversity amplitude signals) are used to calculate a phase signal of the beat signal. This in contrary to methods where the phase is extracted using Hilbert Transforms, and where the beat signal is a real signal.

In other words, angle (i.e., phase) diversity detection is used to obtain angle (i.e., phase) diversity beat signals S1, S2, S3. Two or more detections providing information of angle (phase) are provided to provide diversity of angle detection. This may be utilized for simple determination of the angle based on the detections.

The instantaneous phase $(\phi_{FMCW}(t) - \phi_{FMCW}(t - \tau))$ of a real signal $(\cos [\phi_{FMCW}(t) - \phi_{FMCW}(t - \tau)])$ can be extracted by conversion to the complex domain (IQ without DC) using mathematical calculations. IQ represents the in-phase (I) and quadrature (Q) components of the signal, and 'without DC' implies that a direct current component is removed or not considered.

In a sense, the IQ signal is another type of the S1 signal but in a complex domain (i.e., having a same phase). By creating the IQ signal, the phase of S1 can be easily extracted (e.g., since complex signals are easier, more real-time, and more accurate to extract phases from).

Then, the phase of the signal S1 corresponds to the instantaneous frequency of the laser. It is appreciated that the instantaneous phase $(\phi_{FMCW}(t) - \phi_{FMCW}(t - \tau))$ corresponds to a finite difference of a laser phase, which in turn corresponds to an estimation of instantaneous laser frequency.

Hence, a phase of the beat signal can be extracted by:

$$\phi_{beat}(t) = \phi_{FMCW}(t) - \phi_{FMCW}(t - \tau) = \frac{d\phi_{FMCW}(t)}{dt} \cdot \tau.$$

Interference is measured with a fixed delay, denoted as $\tau$, which is small but not zero. If $\tau$ approaches zero, there would be no beat signal, as the signals would be identical with no delay. Conversely, if $\tau$ is relatively large (or too large), the accuracy of the measurements is affected as the difference between the measured phases at $t$ and $t - \tau$ is taken into account.

Further, if $\tau$ is zero, there is no beat signal as the result is essentially corresponding to the direct current (DC) component. The method may hence use the phase finite difference to estimate the phase derivative, or instantaneous frequency. This necessitates that $\tau$ should not be zero. However, $\tau$ may be chosen appropriately based on the rate of change of the laser frequency. A smaller $\tau$ may enhance accuracy of the method but at the cost of reducing the signal-to-noise ratio (SNR).

For scenarios where the laser frequency changes rapidly, $\tau$ may be sufficiently small (i.e., smaller than the rate of frequency change) to accurately track these changes. Conversely, if the laser frequency changes slowly, a larger $\tau$ can be used without compromising accuracy.

To achieve this, the delay line described herein may be a small delay line, e.g., in order to record instantaneous frequency. However, this delay cannot be too small, as it would eliminate the beat signal. The length of the delay line may be adapted or optimized based on these constraints. Specifically, $\tau$ may be chosen according to the laser frequency change rate.

In some cases, it may be feasible to use a small fixed delay $\tau$ in the delay line to derive instantaneous frequency by analyzing how the angle of the complex signal varies over time. For applications such as LIDAR, where the frequency changes relatively slowly, a delay can be selected based on the a fastest changing scenario. Such a delay may be adequate for slower cases while still providing a good or sufficient SNR. For example, a delay of 5 cm could be suitable for chirp speeds ranging from kHz to MHz.

In an example, beat signals of the three outputted angle diversity signals 124 of the 120-degree optical hybrid coupler based approach have 120 degrees offset as presented in Fig. 2. The three detected signals from the three single-ended photodiodes are converted from analog domain to the digital domain through the ADC (e.g., three ADCs). On the other hand, for the 90-degree optical hybrid coupler based approach, two beat signals with a phase offset of 90 degrees are retrieved (as presented in Fig. 3) from two balanced photodiodes.

The control unit 130 samples the three signals S1, S2, S3, for the 120-degree case and two signals S1, S2 for the 90-degree case.

Hence, for the 120-degree case, a resultant 3-dimensional vector in a complex domain may be formed by S1 + S2 *exp(j2π/3) + S3 *exp(j4π/3), where j is the complex number. Thus, the second angle diversity signal S2 has been rotated 120 degrees (j2π/3) in the complex plane relative to the first angle diversity signal S1, and the third angle diversity signal S3 has been rotated a further 120 degrees (j4π/3) in the complex plane relative to the second angle diversity signal S2.

Analogously, in the 90-degree case, the two detected angle diversity signals S1, S2, are formed into a 2-dimensional vector in the complex domain, which vector is represented by S1 + S2 *exp(jπ/2). Thus, the second angle diversity signal S2 has been rotated 90 degrees (jπ/2) in the complex plane relative to the first angle diversity signal S1.

The instant phase angle of the signal in complex domain can then be calculated as described below. This phase angle corresponds to an instant frequency of the FMCW light signal.

The phase angle may be calculated by determining the angle of the formed vector, using equation (1) for the 120-degree case, and equation (2) for the 90-degree case:

$$\text{angle} = \mathbf{UNWRAP}(\mathbf{ANGLE}(\ S1\ +\ S2 * \exp\left(\frac{j2\pi}{3}\right) + \ S3 * \exp\left(\frac{j4\pi}{3}\right))) \qquad (1)$$

$$\text{angle} = \mathbf{UNWRAP}(\mathbf{ANGLE}(\ S1\ +\ S2 * \exp\left(\frac{j\pi}{2}\right))) \qquad (2)$$

In equations (1) and (2), j is the complex number, **ANGLE** is a calculator to get the angle of a vector, and the **UNWRAP** is a calculator to unwrap radian phase angles by adding multiple $\pm 2\pi$.

Hence, a phase angle can be calculated. In other words, the control unit 130 here calculates a frequency/phase (i.e., phase angle) corresponding to the at least two angle diversity signals 124 by creating a vector and calculating the angle of the vector.

Moreover, the **ANGLE** and **UNWRAP** calculators, may by way of example, be calculators with the corresponding names in *Matlab* - a programming and numeric computing program provided by MathWorks Inc, Natick, MA, United States.

The **UNWRAP** calculator specifically adds a multiple of $2\pi$ to a consecutive phase angle of the phase angle ramp on a condition that a phase difference between a phase angle (of the phase angle ramp) and the consecutive phase angle (of the phase angle ramp) is larger than or equal to $\pi$.

In particular, the operation of adding a multiple of $2\pi$ to the consecutive phase angle of the phase angle ramp if the phase difference between a phase angle and a consecutive phase angle of the phase angle ramp is larger than or equal to $\pi$, is sometimes referred to as an "unwrap" operation. The purpose of performing the unwrap operation on the extracted phase angle ramp is to eliminate $2\pi$ or 360° jumps in the extracted phase angle ramp.

Further, in equation (1) and (2), the signals S1, S2, and S3 are real signals. As seen in equations (1) and (2), the signals S1, S2, and S3 are combined such as to form a vector in the complex domain. In other words, measuring of an instant frequency/phase of a resulting beat signal may be achieved by synthesizing a complex signal using a plurality of real beat signals.

Hereby, as seen in the lower part of Fig. 4 (i.e., the extension of the processing step Phase calculation & accumulation) a phase angle ramp of the FMCW light signal can be extracted over time.

It is appreciated that the wavelength of the FMCW light signal is non-linearly mapped to driving voltage (i.e., power) of the tunable laser, and that a mapping between driving voltage and time is a linear curve. Therefore, the mapping between phase angle and time (similarly angle-vs-voltage) is a non-linear curve as shown in Fig. 4.

On the other hand, a linear angle-vs-time (angle-vs-voltage) mapping would correspond to a linear frequency chirp. Hence, using the measured non-linear mapping, the non-linearity can be estimated.

As depicted in Fig. 4, after the non-linearity is estimated, a pre-distortion calculation is performed. The pre-distortion calculation may comprise determining a pre-distortion curve (i.e., a pre-distorted voltage ramp) based on the non-linearity estimate. The pre-distortion curve is then used to produce a control signal 132 via conversion by the DAC. In other words, the pre-distortion curve is used to update the driving voltage of the tunable laser 110 via the DAC.

The pre-distorted voltage ramp may, e.g., be calculated from the estimated phase non-linearity by least-mean-squared or linear interpolation. The frequency chirp linearization may, for example, be realized in an iterative manner. For this, the calculated voltage ramp (up and down) may be stored and applied for a subsequent iteration. This iterative approach can be also implemented in the control unit 130.

In Fig. 4, the illustrated graphics in the control unit 130 schematically illustrate the process of using the input angle diversity signals (here three) to retrieve a phase angle curve (solid curve), which in turn is used to from a pre-distortion curve (dashed curve)

Although not shown in the figures, a reference phase angle ramp may be subtracted from the extracted phase angle ramp. Hence, a real-time lock of the frequency chirp to a certain ramp signal can be realized. In other words, an Opto-Electronic Phase-Locked Loop, OEPLL, may be provided. The OEPLL may, e.g., stabilize a frequency and phase of the FMCW light signal 112.

By the term "reference phase angle ramp" is here meant a phase angle ramp which changes much slower than a feedback speed (e.g. 100 times slower).

By subtracting the reference phase angle ramp from the extracted phase angle ramp, what remains is an estimated error. This estimated error may be used for further calculations such as (but not limited to) proportional amplification, integral calculation, and/or sum for non-linearity compensation.

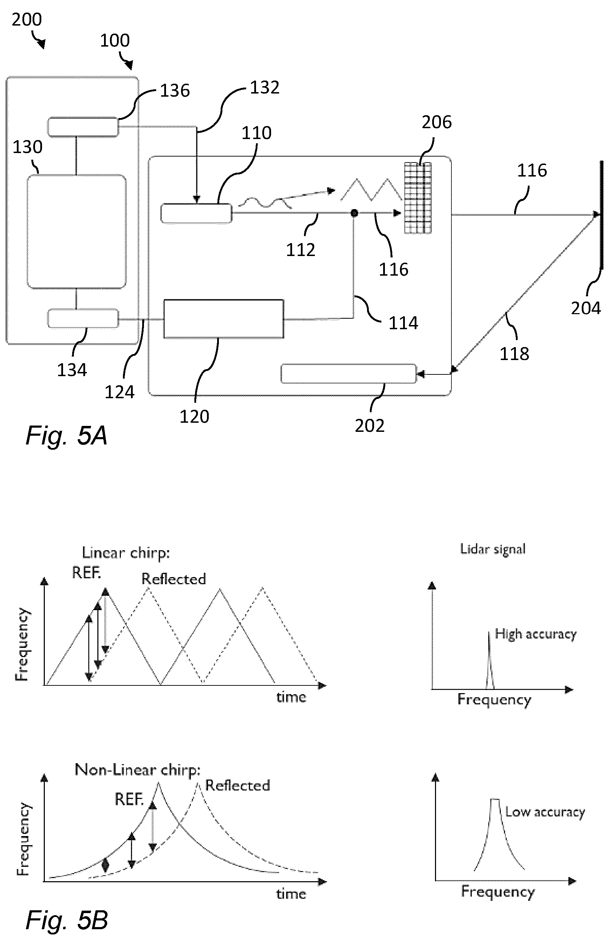

Fig. 5A schematically illustrates a LIDAR system 200 comprising a laser system 100 (e.g., as discussed in relation to Figs. 1-4), and a LIDAR detection unit 202. The LIDAR detection unit 202 receives a reflected light signal 118 based on the FMCW light signal 112.

In particular, the LIDAR detection unit 202 of the LIDAR system 200 detects a LIDAR response signal (i.e., the reflected light signal 118). The LIDAR response signal may hence be based on the propagating portion 116 of the FMCW light signal 112 (i.e. a LIDAR emission signal). The LIDAR detection unit 202 may, e.g., be a photodiode such as a balanced and/or unbalanced photodiode, a photo-multiplier tube (PMT), and/or an image detector.

The LIDAR emission signal is typically split off from the propagating portion 116 of the FMCW light signal 112 prior to the LIDAR emission signal being emitted from the LIDAR system 200. A portion being split off from the propagating portion 116 may be referred to as a local oscillator signal. The LIDAR emission signal may subsequently be emitted towards a target 204. In case the LIDAR emission signal reaches the target 204, at least some of the LIDAR emission signal may be reflected back towards the LIDAR system 200. The LIDAR emission signal being reflected back (i.e., the reflected light signal 118) and the local oscillator signal may then be combined again, at the LIDAR system 200. When the two signals are combined, interference between the light signals may occur. The resulting combined signal may form a beat frequency. This beat frequency is linked to the distance between the LIDAR system 200 and the target 204. In the present LIDAR system 200, the combined signal may be detected by the LIDAR detection unit 202, thereby detecting the reflected light signal 118 (i.e., the LIDAR response signal).

Further, in the block diagram depicting the LIDAR system 200 in Fig. 5A, the LIDAR system 200 comprises a tunable laser 110 (e.g., a fast frequency-chirped laser tunable by phase or gain), an optical measurement unit 120 (e.g., for real-time chirp tracking), and a control unit (for complex domain non-linearity estimation and predistortion calculation). Herein, angle diversity signals 124 outputted by the optical measurement unit 120 are converted by an ADC before entering the control unit 130. A pre-distorted curve (as discussed in relation to Fig. 4) is then used to compensate for the inherent non-linearity in the frequency chirp via a control signal 132. The control signal 132 being outputted from the control unit 130 via a DAC 136.

In Fig. 5A, the LIDAR system 200 further comprises an optical phased array or optical antenna 206 for dynamically steering the propagating portion 116 of the FMCW light signal 112 across a field of view.

In an ideal case, where the frequency chirp is linear, the range resolution of a LIDAR system 200 (based on a FMCW light signal 112) is given by equation (3):

$$\Delta D = \frac{c}{2 \cdot f_{exc}}, \tag{3}$$

where c [m/s] is the speed of the light in vacuum, and $f_{exc}$ is excursion frequency of the tunable laser 110.

However, when the frequency chirp is non-linear, the width of a peak of a corresponding beat spectrum is enlarged, and thus the range accuracy is deteriorated (see lower part of Fig. 5B). The peak widening or broadening caused by the non-linearity of the frequency chirp can be quantified by equation (4):

$$\Delta D = D \cdot \frac{2\pi \cdot v_{nl,rms}}{f_{exc}}, \tag{4}$$

where D [m] is a distance to the target 204, and $v_{nl,rms}$ [Hz] is the root mean squared of a non-linear component of the (ramp up or ramp down) frequency chirp. From equation (4), it is noted that the range resolution $\Delta D$ is higher for longer target distances $D$ when the laser non-linearity $v_{nL,rms}$ is not suppressed. In other words, an effect of the chirp non-linearity is more prominent for far away targets 204. Thereby, a high chirp linearity is, e.g., beneficial in LIDAR systems 200 which may measure long target distances (e.g., in order of hundreds of meters).

The LIDAR system 200 may, for example, be integrated into an automotive vehicle. Hence, the LIDAR system 200 may provide accurate real-time distance and velocity data of surroundings of the automotive vehicle (even for long distances).

In conclusion, the methods and systems described herein achieves high-quality linear chirp in FMCW laser systems, with a low-complexity architecture and enhanced robustness against environmental variations.

In the above the inventive concept has mainly been described with reference to a limited number of examples. However, as is readily appreciated by a person skilled in the art, other examples than the ones disclosed above are equally possible within the scope of the inventive concept, as defined by the appended claims.

**Claims**

**1.** A laser system (100) for generating a frequency modulated continuous wave, FMCW, light signal (112), the system (100) comprising:

a tunable laser (110) for generating the FMCW light signal (112);
an optical measurement unit (120) configured to receive a portion (114) of the FMCW light signal (112), and to output, via an optical hybrid coupler (122), at least two angle diversity signals (124) based on a difference between a first and second signal (114a, 114b) formed by splitting the portion (114) of the FMCW light signal (112) wherein the second signal (114b) is delayed relative to the first signal (114a), wherein a pair of signals of the at least two angle diversity signals (124) have a fixed phase shift relative to each other; and
a control unit (130) configured to:

receive the at least two angle diversity signals (124), estimate, based on the at least two angle diversity signals (124), a compensation needed for adjusting a non-linearity of a frequency chirp of the tunable laser (110), and
output a corresponding control signal (132) to the tunable laser (110),

wherein the control signal (132) is configured to improve a linearity of the frequency chirp.

2. The laser system (100) according to claim 1, wherein the optical measurement unit (120) comprises:

an interferometer structure configured to split the portion (114) of the FMCW light signal (112) into the first signal (114a) and the second signal (114b), and to delay the second (114b) signal relative to the first signal (114a),
the optical hybrid coupler (122) configured to output the at least two angle diversity signals (124) based on an interference between the first signal (114a) and the second signal (114b), and/or
at least two photodiodes for detecting the at least two angle diversity signals (124)

3. The laser system (100) according to claim 1 or 2, wherein the fixed phase shift is the same between any pair of the at least two angle diversity signals (124).

4. The laser system (100) according to any one the preceding claims, wherein the control unit (130) is configured to repeatedly output a corresponding control signal (132) to the tunable laser (110), and wherein the control signal (132) is configured to repeatedly improve the linearity of the frequency chirp.

5. The laser system (100) according to any one the preceding claims, wherein the laser system (100) is integrated onto a single semiconductor chip.

6. The laser system (100) according to any one of the preceding claims, wherein the optical hybrid coupler (122) comprises at least one multiple mode interferometer, MMI.

7. The laser system (100) according to any one of the preceding claims, wherein the control unit (130) is further configured to calculate a frequency and/or phase corresponding to the at least two angle diversity signals (124) by creating a vector and calculating an angle of the vector.

8. The laser system (100) according to any one of the preceding claims, further comprising an Analog-to-Digital Converter, ADC, and a Digital-to-Analog Converter, DAC, wherein the ADC is configured to convert an analog input signal, to the control unit (130), based on the at least two angle diversity signals (124), into a digital signal, wherein the control unit (130) is configured to convert the digital signal into a complex domain, calculate a phase angle, estimate non-linearity, perform pre-distortion calculations, and/or output a processed digital signal, wherein the DAC is configured to convert the processed digital signal into the control signal (132).

9. The laser system (100) according to any one of the preceding claims, wherein the control unit (130) further comprises a reference signal, wherein the control unit (130) and the measurement unit (120) forms an Opto-Electronic Phase-Locked Loop, OEPLL, configured to stabilize a frequency and phase of the FMCW light signal (112).

10. A LIDAR system comprising a laser system (100) according to any one of claims 1-9, and a LIDAR detection unit, wherein the LIDAR detection unit is configured to receive a reflected light signal based on the FMCW light signal (112).

11. The LIDAR system according to claim 10, wherein the LIDAR system is integrated into an automotive vehicle, and configured to provide real-time distance and velocity data of surroundings of the automotive vehicle.

12. A method for improving a linearity of a frequency chirp of a frequency modulated continuous wave, FMCW, light signal (112), the method comprising:

generating, via a tunable laser (110), the FMCW light signal (112);

receiving, at an optical measurement unit (120), a portion (114) of the FMCW light signal (112);

outputting, via an optical hybrid coupler (122), at least two angle diversity signals (124) based on a difference between a first and second signal (114a, 114b) formed by splitting the portion (114) of the FMCW light signal (112) wherein the second signal (114b) is delayed relative to the first signal (114a), wherein a pair of signals of the at least two angle diversity signals (124) have a fixed phase shift relative to each other;

receiving, at a control unit (130), the at least two angle diversity signals (124);

estimating, based on the at least two angle diversity signals (124), a compensation needed for adjusting a non-linearity of a frequency chirp of the tunable laser (110); and

outputting a corresponding control signal (132) to the tunable laser (110),

wherein the control signal (132) improves a linearity of the frequency chirp.

13. The method according to claim 12, wherein the step of estimating the compensation needed for adjusting the non-linearity of the frequency chirp of the tunable laser (110) comprises:

converting an analog signal, based on the at least two angle diversity signals (124), into a digital signal,

converting the digital signal into a complex domain,

calculating a phase angle,

estimating a non-linearity,

performing pre-distortion calculations,

outputting a processed digital signal, and/or

converting the processed digital signal into the control signal (132).

14. The method according to claim 12 or 13, further comprising repeating the steps as set forth in claim 12.

15. The method according to any one of claims 12-14, further comprising, at the optical measurement unit:

splitting, at an interferometer structure, the portion of the FMCW light signal into the first signal and the second signal,

delaying the second signal relative to the first signal; and

detecting, via at least two photodiodes, the at least two angle diversity signals.

Fig. 1

Fig. 2

Fig. 3

124

Fig. 4

Fig. 5A

Linear chirp:
REF.
Reflected

Frequency
time

Lidar signal

High accuracy

Frequency

Non-Linear chirp:
REF.
Reflected

Frequency
time

Low accuracy

Frequency

Fig. 5B

Europäisches
Patentamt
European
Patent Office
Office européen
des brevets

# EUROPEAN SEARCH REPORT

**Application Number**

EP 24 21 8658

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/076953 A2 (SILC TECH INC [US]) 14 April 2022 (2022-04-14) * paragraphs [0023] - [0027], [0030], [0041], [0055] - [0058], [0072], [0080], [0087] - [0091]; figures 1, 2, 8 * | 1-15 | INV. G01S7/481 G01S7/4911 G01S7/497 G01S17/34 |
| X | WO 2023/228805 A1 (DENSO CORP [JP]) 30 November 2023 (2023-11-30) * the whole document * & US 2025/085424 A1 (MORIGUCHI CHIHIRO [JP] ET AL) 13 March 2025 (2025-03-13) | 1-15 | |
| X | US 2021/083449 A1 (WOJCIECHOWSKI KEN [US] ET AL) 18 March 2021 (2021-03-18) * paragraphs [0028] - [0038]; figures 1-9 * | 1-15 | |

**TECHNICAL FIELDS SEARCHED (IPC)**

G01S

The present search report has been drawn up for all claims

| Place of search | Date of completion of the search | Examiner |
|---|---|---|
| Munich | 30 April 2025 | Beer, Mark |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

& : member of the same patent family, corresponding
  document

EPO FORM 1503 03.82 (P04C01)

## ANNEX TO THE EUROPEAN SEARCH REPORT
## ON EUROPEAN PATENT APPLICATION NO.

EP 24 21 8658

30-04-2025

| Patent document cited in search report | | Publication date | Patent family member(s) | | Publication date |
|---|---|---|---|---|---|
| WO 2022076953 | A2 | 14-04-2022 | CN | 116209916 A | 02-06-2023 |
| | | | EP | 4291920 A2 | 20-12-2023 |
| | | | JP | 2023542082 A | 05-10-2023 |
| | | | US | 2022094140 A1 | 24-03-2022 |
| | | | WO | 2022076953 A2 | 14-04-2022 |
| WO 2023228805 | A1 | 30-11-2023 | CN | 119487418 A | 18-02-2025 |
| | | | JP | 2023172404 A | 06-12-2023 |
| | | | US | 2025085424 A1 | 13-03-2025 |
| | | | WO | 2023228805 A1 | 30-11-2023 |
| US 2021083449 | A1 | 18-03-2021 | CN | 111492263 A | 04-08-2020 |
| | | | DE | 112018005777 T5 | 13-08-2020 |
| | | | US | 2021083449 A1 | 18-03-2021 |
| | | | WO | 2019121069 A1 | 27-06-2019 |

EPO FORM P0459

For more details about this annex : see Official Journal of the European Patent Office, No. 12/82